# EUROPEAN PATENT SPECIFICATION

(11) **EP 1 063 206 B1**
(45) Date of publication and mention of the grant of the patent: **22.10.2003**
(21) Application number: 99125262.8
(22) Date of filing: 17.12.1999
(51) Int. Cl.: C04B 14/10

(54) **A building material comprising a mixture of baked clay and cement**
Eine Mischung von gebranntem Ton und Zement enthaltendes Bauelement
Elément de construction contenant un mélange d' argile cuite et de ciment

(30) Priority: 21.06.1999 IT VR990055
(43) Date of publication of application: 27.12.2000
(73) Proprietor: Sannini Impruneta S.p.A., 50023 Impruneta (FI) (IT); Stone Italiana S.r.l., 37135 Verona (IT)
(72) Inventor: Casamonti, Marco, 50012 Bagno a Ripoli (FI) (IT)
(74) Representative: Petraz, Gilberto Luigi

(56) References cited:
- EP-A- 0 490 813
- EP-A- 0 989 104
- DE-A- 1 584 359
- DE-B- 1 296 071
- FR-A- 806 648
- GB-A- 871 164
- US-A- 4 246 036

## Description

### TECHNICAL FIELD

The present invention relates to a new building material. Particularly, the present invention relates to a cotto and cement mixture-based building material. The invention is mainly applicable both to the field of residential buildings, and to the manufacturing of floor and covering slabs, and further to the production of concrete for the accomplishment of concrete buildings.

### BACKGROUND ART

It is known in the field a process for the production of panels or slabs made of agglomerate material, for example made of marble and/or sands and/or quartz and granites, quartz and sands additioned to predetermined amounts of binding resins.

Such a process comprises different working stages, namely:
- a first grinding stage of the several materials making up the agglomerate;
- a second mixing stage of the ground materials, in order to obtain a product that is most homogeneous; during the above stage binding resins are additioned;
- a third agglomerate pressing and compacting stage, during which the desired shape is obtained;
- a fourth panel setting stage carried out at a predetermined temperature;
- a fifth polishing and burnishing stage carried out on both sides of the panel;
- a sixth sizing, chamfering, calibration, panel flaring stage, followed by the discharge of the final products.

A process as the one outlined above makes it possible to obtain panels or slabs made of agglomerate material having carefully predetermined length, width and thickness, and it is carried out on a continuous basis by a suitable equipment.

The document EP-A-490813 describes a building material for use inter alia in the manufacture of large size slabs having insulation properties, which comprises grinded backed clay bricks and a hydraulic binder, the binder being preferably white cement. Accordingly to the above document, said ground material and hydraulic binder are used in the mixture in a weight ratio 3:1.

Furthermore, the document FR-A-806648 discloses concrete mixture comprising Portland cement, baked clay, sand and gravel in which the baked clay provide several advantages with reference to the backing temperature to be used and to the compression resistance of the product obtained.

One of the possible applications that the panels obtained by dint of the process described above is geared towards the accomplishment of so-called floating floors, wherein the panels are positioned on a suitable metal lattice above the ground in order to make it possible to have a free space of a predetermined thickness between the ground and the floor and generally speaking suitable for allowing the laying of large amounts of electric cables and water pipes.

Despite it being relatively easy to lay pipings, floating floors bring about a number of drawbacks and disadvantages that limit and complicate their use.

A main drawback of floating floors is that they are operationally electrically isolated from the ground.

This gives rise to several problems for the people that walking on that type of floor, get electrostatically charged, and discharge from time to time when they come to contact with conducting materials, causing uncomfortable characteristic electric discharges; in case they come to contact with sensitive electronic equipment, such as computers or precision scientific apparati, the electric discharges may even cause considerable damage to the apparati themselves.

A further known application of the process described above is to the production of slabs for outside wall coverings, of very high buildings for example.

In such a case it is desirable to be able to obtain slabs with remarkable sizes, aiming at shortening the times required for putting them in place.

There are found to exist on the other appliances for the production of traditional concrete slabs, which are based on an inert made up of gravel and/or stones and cement (therein comprising several types of cement such as Portland cement, white cement, etc.), that make it possible to obtain slabs with remarkable sizes. However, said slabs do not result to be adequately applicable as outside wall coverings, because they are peculiarly prone to host efflorensces deriving form the employment of the cement.

Traditional concrete, which is produced from different percentages of cement, sand and gravel is also commonly used for the building of concrete buildings.

As it is well known, in this case the mixture is poured into a footing form with a predetermined shape that is removed once the mixture has set.

Even in this case it is possible to obtain castings with colours that are different from the colour they normally have, that is grey.

However, it is easy to observe that in order to obtain a certain uniformity of the colouring, it is sometimes necessary to resort to remarkable amounts of additives, this weighing on the final costs of the whole building work.

Therefore, although such concretes may be effectively coloured by the addition of suitable additives (that on the other hand increase the general production costs) to the composition of the basic mixture, in order to confer an aesthetic effect to the castings or to the slabs that differs from the normal "cement-grey" colour, with time they result to be inadequate for use on products that have to be inherently remarkably valuable and have to have a marked impact from the strictly aesthetic point of view.

The use of a high temperature baked-clay based material for the production of floorings and coverings at large has been known in the building field for many centuries, the material being generally defined with the term "cotto".

In so far as the present specification is concerned, the word "cotto" indicates the product obtained at the end of a process of baking a clay, which is typical of the Italian region Tuscany, whereby said clay is possibly additioned with small percentages of other components, said product being not only used for making floors, but also for the production of a number of other items such as tiles, bent tiles, bricks, listels, steps, vases and several other objects.

In respects of other known clays, cotto of Tuscany has indeed enhanced mechanical properties such as shock and compression resistance, very good thermal and acoustic insulation properties, a good watertightness, a very high level resistance to fire and freezing even in particularly difficult climates.

However it is known that cotto of Tuscany is a rather rigid material that is worked by extrusion and with which it is possible to produce slabs or tiles with limited size.

Moreover, to date, the Applicants are not aware of any specific application of cotto of Tuscany for the production of a cement concrete mixture usable as a building material for large slabs or as the main component of concrete castings for the production of items having all possible shapes and sizes.

### DESCRIPTION OF THE INVENTION

The present invention aims at obviating the limits and drawbacks that are typical of the prior art, aiming at proposing a new building material that makes it possible to produce panels or slabs that can be advantageously employed on sites wherein all possibilities to have electric discharges is ruled out.

A further aim of the present invention is that of proposing a new building material comprising a mixture of cotto of Tuscany and cement, to which it is not necessary to add any colouring in the production of slabs that has a colour that is naturally similar to that of cotto of Tuscany, and that can be on that basis used for applications bearing a certain value, for example and not limitedly for outside floorings.

A further aim of the present invention is that of supplying a new cotto and cement-based building material that can be employed for producing a mixture suitable for concrete castings with a uniform colouring that approaches that of cotto of Tuscany, and that can be for that reason used for the production of items with a remarkable aesthetic value.

The above aim has been accomplished by proposing a building material with the features detailed in the main claim.

Dependent claims outline particularly advantageous forms of embodiments of the building material according to the present invention.

The building material according to the present invention is made of a concrete comprising a cement and mainly cotto mixture suitably ground with the possible addition of other inert components, sand or gravel for example.

The amount between 15% and 80% of cotto in the mixture, which is well known to have a reddish colour, allows the production of concrete slabs with remarkable sizes and with a natural colouring, without resorting to colouring additives.

Furthermore, it is in this case possible to accomplish concrete wall works that have a colouring that is natural and similar to that of cotto, in so doing obtaining aesthetic results that are inherently of great value.

Said natural colouring can be greatly modified, according to the needs, simply varying the amount of cotto in the mixture, expressed as a percentage for example.

According to the present invention, the cotto of Tuscany has a chemical composition comprising SiO₂ ranging between 43.0% and 46.0% by weight, Al₂O₃ totalling up to 17.5-19.0 %, Fe₂O₃ between 6.5% and 7.5% by weight, CaO between 9.0% and 11% and CaCO₃ between 17.0% and 19.5%, MgO between 2.00% and 3.5%, K₂O between 2.0% and 3.5% and Na₂O between 0.5% and 1.0%.

According to a feature of the present invention, the building material comprising a mixture of cotto of Tuscany and cement is totally electrostatically inert.

For the above reason it is possible to envisage its application to the production of slabs, therein comprised large slabs, to lay on sites where all possible electrostatic discharges must be eliminated, particularly in places where computers and/or other appliances provided with sophisticated electronic control logics that might be possibly damaged by electrostatic discharges are present.

According to a further feature of the present invention, the cotto and cement based building material can be categorized in the "0" (zero) class in so far as its inflammability is concerned, therefore it can be regarded as being totally fire-proof.

This other feature is particularly important when a use of the material on sites where any risk of fire must be ruled out is planned.

According to a further feature of the present invention, the cement and cotto based building material in whose mixture a great amount of sand and gravel is substituted with ground cotto having different granulometries, improves some of the basic properties of concrete.

In fact, since cotto of Tuscany has a very scarce water absorbance index, concrete castings made with the material according to the present invention have certain features that prevent the iron in the casting from oxidating; moreover, still on account of the presence of cotto, a smaller contraction of the material after setting is observed, consequently a weaker occurrence of crevices and cracks in comparison with traditional concretes.

According to another aspect of the present invention, and according to a particularly advantageous form of embodiment, the clays the cotto of Tuscany is made of have specific features that take them apart from any other clays.

Namely, they have a specific weight in the 2.75 g/cm³ range, they have an enhanced water absorbance rate, in the 5% range according to the UNI EN 99, and a 0.35 kgm impact breakage coefficient (Royal Decree 2234/1939). Furthermore, the material has a very high frost resistance. The Modulus of Rupture after the frost resistance test amounts to approximately 160 kg/cm².

### DESCRIPTION OF A FORM OF EMBODIMENT

The building material according to the present invention is mainly made up of a mixture containing cotto of Tuscany and cement, possibly additioned with some further inerts, depending on the specific cases.

The cement usable for the production of the mixture can be of any kind, ranging from Portland cement to pozzolan cement or to blast furnace cement or to alumina-cement.

Nonetheless, experiments conducted by the Applicant have demonstrated that for the production of slabs, the use of white cement, which is a type of Portland cement depleted in iron oxide, is to be preferred.

In so far as cotto is concerned, any baked and ground clay of the region Tuscany can be employed in order to obtain a mixture that has the features detailed above in terms of colouring, absence of electrostatic charge, very low water absorbance and antifreezing properties, as well as the negligible contraction that the material is subject to.

The cotto and cement based material according to the present invention is made of a mixture comprising cotto of Tuscany between 15 % and 80% by weight, cement between 5% and 25% by weight, and sand and/or gravel *quantum sufficit* to take up the above mixture to 100%.

Water is added according to classical rules for the production of concrete mixtures, therefore in amounts ranging between 120 liters and about 200 liters per cubic meter of mixture, depending on the applications (mixture for the production of slabs or for casting into the footing form).

According to a particularly advantageous embodiment of the present invention, it is useful to add into the mixture a superfluideser, for example an additive commercially known as "AD 2000", that confers the conglomerate a very good workability.

Further, according to a particularly advantageous embodiment of the present invention, different granulometries of cotto are in the mixture.

More particularly, cotto granulometries range between 0.01 (very fine mesh) and 3.9 mm in case the cotto substitutes sand in the concrete mixture, and over 16.2 mm in case cotto substitutes gravel.

Obviously, the mixture may simultaneously have both cotto granulometry ranges, depending on the applications envisaged for it.

The present invention was described with reference to one preferred form of embodiment thereof.

However, it is clear that there can be several variants of the present invention, to be comprised within the scope of the claims.

It is in fact possible to add other colourings to the mixture in small quantities, in order to emphasise the natural colouring effect given by cotto of Tuscany.

## Claims

1. Building material for the production of mixtures both for the manufacturing of flooring and or covering slabs, and for the production of concretes to be used in concrete buildings, **characterised in that** it comprises a mixture in water comprising a baked clay typical of the Italian region Tuscany, having a chemical composition comprising SiO₂ ranging between 43.0% and 46.0% by weight, Al₂O₃ totalling up to 17.5-19.0 %, Fe₂O₃ between 6.5% and 7.5% by weight, CaO between 9.0% and 11% and CaCO₃ between 17.0% and 19.5%, MgO between 2.00% and 3.5%, K₂O between 2.0% and 3.5% and Na₂O between 0.5% and 1.0%, hereafter denominated "cotto", ground to predetermined granulometries and in amounts ranging between 15% and 80% by weight, cement ranging between 5% and 25% by weight, and sand and/or gravel *quantum sufficit* to take up the mixture to 100%.

2. Material according to claims 1, **characterised in that** the mixture comprises a superfluidising additive.

3. Material according to claim 1 or 2, modified in that, wherever cotto replaces the sand traditionally occurring in concrete, cotto has granulometries ranging between 0.1 and 3.9 mm.

4. Material according to claim 1 or 2, modified in that, wherever cotto replaces the gravel traditionally used for the production of concrete, cotto has granulometries that are higher than 16,2 mm.

5. Material according to anyone of the preceding claims, **characterised in that** the cement used in the mixture is of the "white cement" type.

## Patentansprüche

1. Baumaterial für die Herstellung von Mischungen, sowohl für die Herstellung von Boden- und/oder Bedeckungsplatten als auch für die Herstellung von Betonen zur Verwendung in Betongebäuden, **dadurch gekennzeichnet, dass** es eine Mischung in Wasser umfasst, umfassend einen gebrannten Ton typischerweise der italienischen Region Toskana, mit einer chemischen Zusammensetzung enthaltend CO₂ zwischen 43,0 Gew.-% und 46,0 Gew.-%, Al₂O₃ insgesamt bis 17,5 bis 19,0 Gew.-%, Fe₂O₃ zwischen 6,5 Gew.-% und 7,5 Gew.-%, CaO zwischen 9,0 und 11 % und CaCO₃ zwischen 17,0 % und 19,5 %, MgO zwischen 2,00 % und 3,5 %, K₂O zwischen 2,0 % und 3,5 % und Na₂O zwischen 0,5 % und 1,0 %, hiernach bezeichnet als "Cotto", gemahlen auf vorbestimmte Korngrößenverteilungen und in Mengen zwischen 15 Gew.-% und 80 Gew.-%, Zement zwischen 5 Gew.-% und 25 Gew.-% und Sand und/oder Kies in einer ausreichenden Menge, um die Gesamtmischung auf 100% zu bringen.

2. Material nach Anspruch 1, **dadurch gekennzeichnet, dass** die Mischung ein Superverflüssigerzusatz enthält.

3. Material nach Anspruch 1 oder 2, dadurch modifiziert, dass, wo immer Cotto den Sand, der traditionell in Beton erscheint, ersetzt, Cotto Korngrößenverteilungen zwischen 0,1 und 3,9 mm besitzt.

4. Material nach Anspruch 1 oder 2, dadurch modifiziert, dass, wo immer Cotto den Kies, der traditionell für die Herstellung von Beton verwendet wird, ersetzt, Cotto Korngrößenverteilung besitzt, die größer ist als 16,2 mm.

5. Material nach einem der vorhergehenden Ansprüche, **dadurch gekennzeichnet, dass** der Zement, der in der Mischung verwendet wird, vom "Weißzement"- Typ ist.

## Revendications

1. Matériau de construction pour la production de mélanges à la fois pour la fabrication de dalles de revêtement de sol et/ou de parement, et pour la production de bétons à utiliser dans des ouvrages de béton, **caractérisé en ce qu'**il comprend un mélange en eau comprenant une argile cuite typique de la région de Toscane, avec une composition chimique comprenant du SiO₂ entre 43,0 et 46,0 % en poids, Al₂O₃ totalisant jusqu'à 17,5 - 19,0 %, Fe₂O₃ entre 6,5 et 7,5 % en poids, CaO entre 9,0 et 11 % et CaCO₃ entre 17,0 et 19,5 %, MgO entre 2,00 et 3,5 %, K₂O entre 2,0 et 3,5 % et Na₂O entre 0,5 et 1,0 %, de l'argile désignée ci-après sous le nom de 'cotto', broyée à des granulométries prédéterminées et dans des quantités comprises entre 15% et 80 % en poids, du ciment entre 5 et 25 % en poids et du sable et/ou du gravier en quantité suffisante pour compléter le mélange ci-dessus jusqu'à 100 %.

2. Matériau selon la revendication 1, **caractérisé en ce que** le mélange comprend un additif superfluidifiant.

3. Matériau selon la revendication 1 ou 2, modifié en ce que lorsque le cotto remplace le sable présent traditionnellement dans le béton, le cotto a des granulométries comprises entre 0,1 et 3,9 mm.

4. Matériau selon la revendication 1 ou 2, modifié en ce que lorsque le cotto remplace le gravier utilisé traditionnellement pour la production de béton, le cotto a des granulométries supérieures à 16,2 mm.

5. Matériau selon l'une quelconque des revendications précédentes, **caractérisé en ce que** le ciment utilisé dans le mélange est du type 'ciment blanc'.
